# EUROPÄISCHE PATENTANMELDUNG

(11) **EP 1 918 503 A1**
(43) Veröffentlichungstag der Anmeldung: **07.05.2008**
(21) Anmeldenummer: 07118709.0
(22) Anmeldetag: 17.10.2007
(51) Int. Cl.: E06B 5/16, C03C 3/083, C03C 4/00, C03C 10/00

(54) **Brandschutzverglasung**

(30) Priorität: 25.10.2006 DE 102006050113
(71) Anmelder: Schott AG, 55122 Mainz (DE)
(72) Erfinder: Schwabe Klaus-Dieter, 99510 Apolda (DE); Freitag, Rüdiger, 36433 Etterwinden (DE); Panzner, Gerrit, 07407 Rudolstadt (DE); Klossek, Jens, 99423 Weimar (DE); Ring, Markus, 99084 Erfurt (DE); Schneider, Klaus, 99510 Apolda (DE); Siebers, Friedrich, 55283 Nierstein (DE); Lautenschläger, Gerhard, 07743 Jena (DE)
(74) Vertreter: Fuchs

(57) **Zusammenfassung**

Die Erfindung bezieht sich auf eine Brandschutzverglasung zumindest der E-Feuerwiderstandsklasse nach DIN EN 357, bestehend aus mindestens einer thermisch oder chemisch vorgespannten monolithischen Brandschutz-Glasscheibe (2) in einem entsprechenden Rahmensystem (1, 6).

Zur Erzielung einer hochtransparenten Brandschutzverglasung mit hohem Feuerwiderstand sieht die Erfindung vor, dass die Brandschutz-Glasscheibe (2) aus einem hochschmelzenden Glas mit einem Erweichungspunkt (log η = 7,6) im Temperaturbereich oberhalb 875° C besteht und hoch vorgespannt ist und dass das Glas ein weitgehend UV-undurchlässiges Aluminosilikatglas ist.

## Beschreibung

Die Erfindung bezieht sich auf eine Brandschutzverglasung nach dem Oberbegriff des Anspruchs 1.

In zahlreichen Bereichen, z.B. im Wohnungs-, Gewerbe- und Industriebau, für den Bau öffentlicher Gebäude, im Fahrzeug- oder Schiffsbau, verlangen die gesetzlichen Brandschutzbestimmungen Feuerschutzbarrieren. Dabei müssen auch die zugehörigen Verglasungen, insbesondere die Tür- und Fensterverglasungen den Brandschutzbestimmungen genügen. Man spricht dann von einer Brandschutzverglasung.

Herkömmliche Fenstergläser, d. h. Kalk/Natron-Gläser, sind als Feuerschutzbarrieren ungeeignet, weil sie bei jeder stärkeren thermischen Belastung zerplatzen. Das Feuer und die entstehende Wärmestrahlung könnten sich ungehemmt ausbreiten. Der Grund dafür liegt in dem relativ hohen thermischen Ausdehnungskoeffizienten und der relativ geringen Zugfestigkeit der Kalk/Natron-Gläser.

Von der Industrie wurde daher eine Vielfalt von BrandschutzVerglasungen entwickelt, die einem Feuer zumindest für eine gewisse Zeit einen Widerstand entgegensetzen. Diese Brandschutzverglasungen sind Gegenstand zahlreicher, einschlägiger Schutzrechtsschriften, die auf dem Prinzip basieren, durch Verwendung von besonders hitzefesten transparenten Brandschutz-Scheiben, z. B. aus Glaskeramik oder gehärtetem Glas und vorgegebenen Anordnungen bzw. Halterungen, einen Feuerschutz zu erreichen. Unter dem Begriff Brandschutzverglasungen werden daher Bauteile und Systeme verstanden, die aus einem oder mehreren lichtdurchlässigen Glasscheibenfeldern bestehen, die mit Halterungen und Dichtungen in einem Rahmen eingebaut sind.
Brandschutzverglasungen haben nicht alle den gleichen Feuerwiderstand. Dieser wird auf den Einsatzfall abgestimmt und in den einschlägigen Bestimmungen (DIN EN 357) durch die sogenannte Feuerwider-standsklasse zum Ausdruck gebracht. Hinsichtlich ihrer Feuerwider-standsklassen unterscheidet man EI-, EW- und E-Verglasungen. Durch die Angabe ihrer Feuerwiderstandsdauer in Minuten werden sie zusätzlich charakterisiert (z.B. Ei 30, Ei 90, E 30).

E-Verglasungen verhindern für die entsprechende Zeit nur die Ausbreitung von Feuer und Rauch, d.h. schotten die Brandquelle ab. EW -Verglasungen müssen zusätzlich den Durchtritt der Wärmestrahlung verhindern. E- und EW-Verglasungen können mit monolithischen Glasscheiben oder auch mit mehrschichtigem Verbundglas ausgeführt werden, wobei der Einsatz monolithischer Gläser grundsätzlich zu schlankeren und leichteren Konstruktionen führt.

Bei El-Verglasungen wird darüber hinaus gefordert, dass die Erhöhung der Glasoberflächentemperatur auf der zum Brand abgewandten Seite ein bestimmtes Maß nicht übersteigt. Um dies zu erreichen, sind heute für EI-Verglasungen kombinierte Systeme von sandwichartig aufgebauten Brandschutzscheiben und schichtförmig aufgebrachten Füllern zwischen den Scheiben, die im Brandfall aufschäumen, üblich.

Der Einsatz von vorgespannten Kalk-Natron-Gläsern oder von vorgespannten Borosilikatgläsern zum Herstellen von monolithischen Brandschutzverglasungen ist Stand der Technik. Mit den bekannten Gläsern werden, abhängig vom Format, E-Standzeiten von 60 Minuten (Kalk-Natron-Gläsern) und 120 Minuten (Borosilikatgläser) erreicht.

Die bekannten marktüblichen E-Verglasungen aus vorgespannten Kalk-Natron-Gläsern und Borosilikatgläsern weisen im praktischen Einsatz jedoch erhebliche Nachteile auf. Während ausgewählte
Rahmensysteme (Glaslagerung) auch Standzeiten oberhalb 120 Minuten ermöglichen würden, versagt die Brandschutzverglasung als System jedoch regelmäßig nach temperaturbedingter Glasverformung. Infolge Eigenlast und Überdruck beginnt das Glas in Abhängigkeit von Abmessung und Temperatur zu fließen und der E-kriteriumsrelevante Raumabschluß geht verloren. Um Standzeiten über 60 Minuten zu erreichen, sind für große Scheibenabmessungen Glasdicken oberhalb von ca. 5 mm zu wählen.

Im Vergleich zu Kalk-Natron-Gläsern werden durch den Einsatz von Borosilikatgläsern, z.B. gemäß EP 1 314 704 B1, und speziellen Silikatglasscheiben, z.B. gemäß DE 197 10 289 C1, zwar thermisch stärker belastbare Gläser zur Verfügung gestellt, die aber den aktuellen architektonischen und brandschutztechnischen Anforderungen nicht mehr in allen Belangen entsprechen. Das Glas vorgenannter DE-Schrift hat dabei einen relativ niedrigen Erweichungspunkt von 750 bis 830° C. Die bislang leistungsfähigsten Gläser, d.h. die Borosilikatgläser, weisen darüber hinaus eine hohe UV-Durchlässigkeit auf, was im Architekturbereich aufgrund des erhöhten Energiedurchlasses und der strahlungsbedingten Alterung von innenliegenden Gegenständen stört.

Die Erfindung geht aus von einer Brandschutzverglasung der E- und EW-Feuerwiderstandsklasse, bestehend aus mindestens einer vorgespannten monolithischen Glasscheibe (Funktionsscheibe) in einem entsprechendem Rahmensystem. Ihr liegt die Aufgabe zu Grunde, die Widerstandsfähigkeit der Brandschutzverglasung gegen Temperaturbelastung so zu steigern, dass die in der Brandschutzverglasung ausführbare Scheibenfläche bei gleichbleibender oder geringerer Glasdicke der Einzelscheibe wesentlich vergrößert werden kann.

Diese Aufgabe wird erfindungsgemäß durch die kennzeichnenden Merkmale des Patentanspruches 1 gelöst.

Die Erfindung geht von der Erkenntnis aus, dass durch den Einsatz eines hochschmelzenden Glases mit hohem Erweichungspunkt die Feuerwiderstandsfähigkeit der Brandschutzvergiasung erheblich verbessert wird.
Als Erweichungspunkt (im engl.: softening point) wird in der Glastechnik die Temperatur bezeichnet, bei welcher das Glas eine Zähigkeit η von 10^{7,6} dPa·s (oder log η = 7,6) hat, d.h. sich durch sein Eigengewicht verformt. Hochschmelzende Gläser mit hohem Erweichungspunkt im Sinne der Erfindung sind solche Gläser, die einen Erweichungspunkt von > 875° C haben.

Überraschenderweise hat sich dabei gezeigt, dass sich durch den Einsatz spezieller hochschmelzender Alumosilikatgläser die erfindungsgemäßen Brandschutzverglasungen aus monolithischen Gläsern ohne o.g. Nachteile herstellen lassen. Die erfindungsgemäßen Brandschutzverglasungen sind hochtransparent, d.h. optisch hochwertig und erreichen aufgrund des hohen Erweichungspunktes des verwendeten Glases eine sehr hohe Widerstandszeit im Brandfall, die deutlich höher als bei den bekannten Brandschutzverglasungen liegt. Es konnte eine Erhöhung der Widerstandszeit auf mehr als E 120 im Test nach DIN EN 1363 (Fläche/Zeit) festgestellt werden. Die minimal einsatzfähige Glasdicke reduziert sich dabei auf 2 mm. Durch eine hohe chemische oder auch thermische Vorspannung der Gläser wird eine hohe Biegezugfestigkeit und Temperaturwechselbständigkeit erreicht, welche auch insoweit den Einsatz der monolithischen Glasscheiben in der Brandschutzverglasung ermöglicht. Die Biegezugfestigkeit beträgt bei thermisch vorgespannten Brandschutz-Glasscheiben, mindestens 120 N/mm² und bei chemischer Vorspannung mindestens 500 N/mm².

Im übrigen ist das im Rahmen der Erfindung verwendete Aluminosilikatglas ein weitgehend UV-undurchlässiges Glas.

Die erfindungsgemäße Brandschutzverglasung kann neben der als Brandschutzglas ausgebildeten Funktionsscheibe noch weitere Scheiben aufweisen, die mit oder ohne räumlichen Abstand zur Funktionsscheibe als Laminat oder Isolierverglasung integriert werden.

Wahlweise kann die Glasdicke der Funktionsscheibe 2 bis 20 mm betragen. In bevorzugten Ausführungsformen beträgt sie 3 bis 12 mm.

Konventionelle hochschmelzende Gläser sind prinzipiell bekannt. Ihr Einsatz in Brandschutzverglasungen war aber bislang aufgrund mangelnder thermischer Vorspannfähigkeit und fehlender Massenverfügbarkeit in hoher optischer Qualität nicht möglich.

In einer weiteren bevorzugten Ausführungsform der Erfindung wird in der Brandschutzverglasung eine beschichtete Funktionsscheibe und/oder es werden andere beschichtete Scheiben eingesetzt. Dabei kann es sich beispielsweise um eine oder mehrere Wärmedämmungsschichten, sogenannte LowE-Gläser, handeln, um die Strahlungsbilanz der Brandschutzverglasung im Infrarotbereich zu verbessern. Es sind aber auch rein designverbessernde Schichten ohne weitere Funktion ausführbar. Als Low-E-Gläser werden u.a. mit Silber beschichtete Wärmeschutzgläser bezeichnet. LOW-E = Low Emissivity = niedrigere Emissität = niedrige Wärmestrahlung (im Vergleich zu einem definierten "schwarzen Körper"). Sie werden auch als Wärmeschutzglas oder hochdämmendes Isolierglas bezeichnet.

In der erfindungsgemäßen Brandschutzverglasung können verschiedene Rahmensysteme in Verbindung mit den monolithischen Scheiben aus hochschmelzendem Glas verwandt werden. Zur Verbesserung oder Anpassung der Eigenschaften sind Rahmen aus Stahl-, Aluminium oder auch Holzprofilen nutzbar, die Materialien können bedarfsweise auch kombiniert werden.

Problemlos können im Rahmen der Erfindung neben der Funktionsscheibe weitere Scheiben in die Brandschutzverglasung integriert werden. Dies kann beispielsweise als Laminat oder als räumlich getrennte Anordnung (Luftzwischenraum) über ein Isolierglasaufbau mit Gegenscheibe realisiert werden.

Weitere Ausgestaltungen der Erfindung sind in Unteransprüchen gekennzeichnet sowie ergeben sich aus der Figurenbeschreibung.

Anhand von mehreren in den Zeichnungen dargestellten Ausführungsbeispielen wird das erfindungsgemäße Brandschutzglas näher erläutert.

### Es zeigen:

- Fig. 1: in einer Frontsicht-Darstellung die Ausbildung eines Rahmensystems für eine Brandschutz-Verglasung mit den erfindungsgemäßen Brandschutzgläsern,
- Fig. 2: in einer querschnittlichen Ausschnitt-Darstelllung eine erste Ausführungsform der Aufnahme der Brandschutzglasscheiben im Profilrahmen mit einer beidseitigen Glasleisten-Abdeckung,
- Fig. 3: in einer Darstellung entsprechend Fig. 2 eine zweite Ausführungsform mit einer einseitigen Glasleisten-Abdeckung,
- Fig. 4: in einer Frontansichts-Darstellung die Ausbildung einer zweiten Ausführungsform eines Rahmensystems einer Brandschutzverglasung mit Stahlprofilen und den erfindungsgemäßen Brandschutzgläsern,
- Fig. 5: in zwei Figurenteilen A, B in querschnittlichen Ausschnitt-Darstellungen verschiedene Ausführungsformen für eine Halterung der erfindungsgemäßen Brandschutzglasscheiben im Stahlprofil der Rahmenkonstruktion nach Fig. 4, und
- Fig. 6: in einer querschnittlichen Ausschnitt-Darstellung den Eckbereich einer als Isolierverglasung ausgeführten Brandschutzverglasung mit den erfindungsgemäßen Brandschutzscheiben.

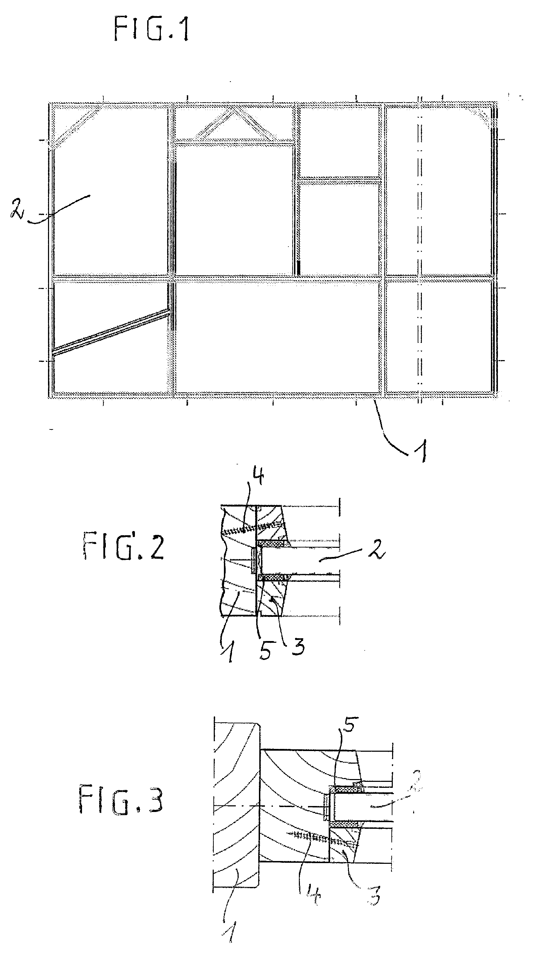

Die Figur 1 zeigt in einer schematisierten Frontansicht eine aus Holzprofilen 1 bestehende Verglasungskonstruktion, die mehrere, geometrisch unterschiedlich ausgestaltete Feder aufweist. Die dargestellte geometrische Konstruktion ist nur als Ausführungsbeispiel für eine Verglasungskonstruktion für Versuchszwecke zu sehen, um gleichzeitig verschieden geometrisch ausgestaltete Brandschutzverglasungen untersuchen zu können. Die einzelnen Felder können daher auch andere geometrische Formen besitzen, abhängig von der Funktionalität des herzustellenden Raumabschlusses bzw. des gewünschten Designs.

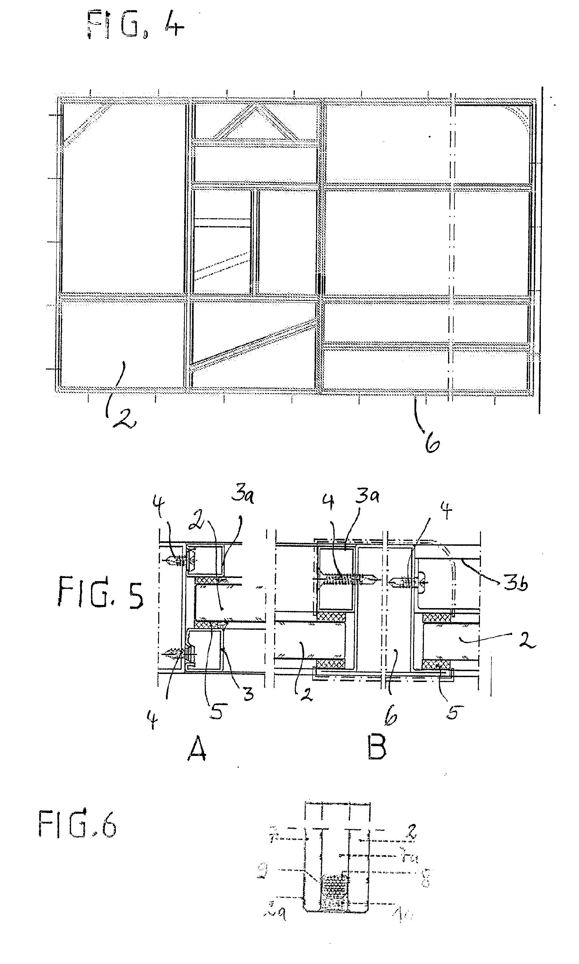

Den Feldern sind jedoch in der Regel keine besonderen Funktionen zugeordnet. Die Figuren 1 und 4 zeigen beispielhaft die mögliche Anordnung der Gläser in einer Konstruktion (z.B. maximale Hoch- und Querformate) sowie besondere Formen (Dreiecke, Rundungen u.a.), wie sie in der Regel für die Erteilung einer allgemein bauaufsichtlichen Zulassung geprüft werden müssen.

In diese Felder werden typischerweise Brandschutzglasscheiben 2 (Funktionsscheiben) aus im Floatverfahren hergestellten und thermisch vorgespanntem Glas mit einem Erweichungspunkt oberhalb 875°C, einer Dicke von 4 mm sowie einer Transmission für sichtbares Licht im Bereich von 90 bis 92 % eingebaut.

Im Rahmen der Erfindung können dabei sowohl reine Glastrennwände als auch deren Kombinationen mit Türen und Fenstern ausgeführt werden. Eine bevorzugte Ausführungsform ist hierbei dadurch gekennzeichnet, dass eine verglaste Tür mit Oberlicht und Seitenteil an eine Glastrennwand anschließt.

Die Holzkonstruktion kann hier wahlweise mit Anschlagprofil oder beidseitig mit wahlweise genagelten, geschraubten oder geklebten Glasleisten 3 ausgeführt werden.

Die Figuren 2 und 3 zeigen dabei in einer querschnittlichen Ausschnitt-Darstellung die Halterung der Brandschutzglasscheiben 2 im Holzprofil 1 mit verschraubten Glasleisten 3, wobei in Fig. 2 beidseitig zu der Scheibe 2 eine Glasleiste 3 mit einer Befestigungsschraube 4 angebracht ist, wogegen gemäß Fig. 3 nur auf der einen Scheibenseite eine Glasleiste 3 auf dem Holzprofil 1 aufgeschraubt ist. Der Scheibenrand ist dabei jeweils über eine Falzraumdichtung mit einem Silikonkleber 5 abgedichtet in der zugehörigen Aussparung im Holzprofil 1 aufgenommen.

Die Abmessungen der größten Glasscheibe in dieser Konstruktion betrugen 1.600 mm x 3.000 mm. Der Glaseinstand im Profil betrug 15 mm.

Mit dieser Konstruktion wurde ein Brandversuch entsprechend der Norm EN 1363-1 durchgeführt.

Die Standzeit der Konstruktion betrug mehr als 60 min, so dass diese Brandschutzverglasung den Bedingungen der Feuerwiderstandsklasse E 60 genügt.

Die Fig. 4 zeigt gemäß einer zweiten Ausführungsform in einer schematisierten Frontansicht eine aus Stahlprofilen 6 bestehende Verglasungskonstruktion. Sie besitzt mehrere Versuchsfelder, die analog der ersten Ausführung nach Fig. 1 geometrisch unterschiedlich ausgebildet sind. Das insoweit zur Fig. 1 Gesagte gilt entsprechend auch für die Ausführung nach Fig. 4. In diese Felder werden typischerweise Brandschutzglasscheiben 2 (Funktionsscheiben) aus im Floatverfahren hergestellten und chemisch vorgespanntem Glas mit einem Erweichungspunkt oberhalb 875° C und einer Dicke von 8 mm eingesetzt.

Die Gesamt-Abmessungen der Rahmenkonstruktion betragen, wie im Fall der Fig. 1, 4000 mm x 3000/mm. Die größte Scheibenabmessung beträgt 1.300 mm x 2.500 mm. Der Glaseinstand beträgt 15 mm.

Mit dieser nach Fig. 4 beschriebenen Konstruktion lassen sich, wie im Beispiel 1 nach Fig. 1 erläutert, reine Glastrennwände oder deren Kombination mit Türen ausführen.

Der Stahlprofilrahmen 6 kann hier wahlweise mit Anschlagprofil oder wahlweise beidseitig mit geklippsten oder geschraubten Glasleisten ausgeführt werden, wie in Fig. 5 dargestellt. Als Glasleisten können Stahlhohlprofile 3 a oder Winkelstahl 3 b eingesetzt werden.

Mit dieser Konstruktion wird ein Brandversuch entsprechend der Norm EN 1363-1 durchgeführt.

Die Standzeit der Konstruktion betrug mehr als 180 min, so dass diese Brandschutzverglasung den Bedingungen der Feuerwiderstandsklasse E 180 genügt.

Bei einer dritten Ausführungsform wurde aus im Floatverfahren hergestellte und chemisch vorgespannte Glas mit einem Erweichungspunkt oberhalb 875° C und einer Dicke von 6 mm in einem Isolierglasaufbau mit einem Stahlabstandhalter von 12 mm und einer Gegenscheibe aus 4 mm Ca-Na Glas, in eine aus Stahlprofilen bestehende Verglasungskonstruktion von 4.000 mm x 3.000 mm, bestehend aus mehreren Feldern gemäß Fig. 4 eingebaut. Die größte Scheibenabmessung betrug 1.400 mm x 2.800 mm. Der Glaseinstand betrug 15 mm. Gewählt wurden Profile mit Anschlagprofil und geschraubten Glasleisten.

Mit dieser Konstruktion wurde ein Brandversuch entsprechend der Norm EN 1363-1 durchgeführt.

Die Standzeit der Konstruktion beträgt mehr als 120 min, so dass diese Brandschutzverglasung den Bedingungen der Feuerwiderstandsklasse E 120 genügt.

Mit dieser beschriebenen Konstruktion lassen sich, wie im Beispiel 1 erläutert, reine Glastrennwände oder deren Kombination mit Türen ausführen.

Ziel des Einsatzes von Isolierglasverbunden im Gebäudeinneren ist in der Regel die Reduzierung der Schallwellen von einem Raum zum anderen. Beim Einsatz im Außenbereich steht neben dem Schallschutz die Reduzierung von Wärmeverlusten im Vordergrund.

Fig. 6 zeigt einen vorgenannten Isolierglasverbund, bestehend aus mindestens zwei Scheiben, wobei eine Scheibe 2 aus dem erfindungsgemäßen monolithischen Glas oder aus den unter Beispiel 1 - 2 beschriebenen Kombinationen besteht und die andere Scheibe als Gegenscheibe 7 ausgebildet ist.

Zwischen den Scheiben im Raum 7 a ist im Randbereich 2 a ein Stahl oder Aluminium- oder Stahlabstandshalter 8, gefüllt mit einem Trocknungsmittel angeordnet. Die notwendige Dichtheit des Verbundes wird durch bekannte Dichtstoffe als Primär- 9 und Sekundärdichtung 10 erreicht.

Wahlweise erfolgt die Anordnung von Schmelzventilen in den Abstandhaltern.

Als Gegenscheibe 7 können unvorgespannte Kalk/Natron-Scheiben, ESG-Scheiben, VSG-Scheiben aus Ca-Na- oder ESG-Scheiben verwendet werden. Diese Gegenscheiben können wahlweise gefärbt, bedruckt und/oder beschichtet sein.

Gemäß einer vierten Ausführungsform kann das aus im Floatverfahren hergestellte und chemisch vorgespannten Glas mit einem Erweichungspunkt oberhalb 875° C wahlweise mit reflektierenden Schichten, sogenannten Low-E-Schichten, sowie Sonnenschutzschichten versehen werden. Ziel des Einsatzes dieser Schichten ist es, je nach Anwendungsfall, entsprechende Energieeinspareffekte durch geringere Wärmeverluste über die Verglasung zu realisieren, die Einwirkung der Sonnenstrahlen durch die Verglasung zu reduzieren, und/oder im Brandfall die durch die Verglasung gelangende IR-Strahlung zu reduzieren (EW-Verglasungen).

Der Auftrag der Schichten erfolgt nach bekannten Sputter-, Pyrolyse- oder Tauchverfahren.

Durch die Kombination beschichteter Gläser 2 und den im Beispiel 3 beschriebenen Gegenscheiben 7 lassen sich Eigenschaften, wie Sonnen- und Wärmeschutz mit einer hohen Widerstandsfähigkeit gegen mechanische Beanspruchungen und splitterbindender Wirkung vereinen.

### Bezugszeichenliste

- 1: Holzprofile
- 2: Brandschutzglasscheiben
- 2 a: Randbereich
- 3: Glasleisten
- 3 a: Glasleiste gebildet durch ein Stahlhohlprofil
- 3 b: Glasleiste gebildet durch einen Winkelstahl
- 4: Befestigungsschraube
- 5: Silikonkleber (Falzraumdichtung)
- 6: Stahlhohlprofil
- 7: Gegenscheibe
- 8: Stahlabstandshalter
- 9: Primärdichtung
- 10: Sekundärdichtung

## Patentansprüche

1. Brandschutzverglasung zumindest der E-Feuerwiderstandsklasse nach DIN EN 357, bestehend aus mindestens einer thermisch oder chemisch vorgespannten monolithischen Brandschutz-Glasscheibe (2) in einem entsprechenden Rahmensystem (1, 6), **dadurch gekennzeichnet, dass** die Brandschutz-Glasscheibe (2) aus einem hochschmelzenden Glas mit einem Erweichungspunkt (log η = 7,6) im Temperaturbereich oberhalb 875° C besteht und hoch mit einer Biegezugfestigkeit von über 100 N/mm² vorgespannt ist und dass das Glas ein weitgehend UV-undurchlässiges Aluminosilikatglas ist.

2. Brandschutzverglasung nach Anspruch 1, **dadurch gekennzeichnet, dass** der E-Modul des hochschmelzenden Glases über 75.000 N/mm² liegt.

3. Brandschutzverglasung nach Anspruch 1 oder 2, **dadurch gekennzeichnet, dass** die thermisch vorgespannten Brandschutz-Glasscheiben (2) eine Biegzugfestigkeit über 120 N/mm² und chemisch vorgespannte Brandschutz-Glasscheiben (2) eine Biegzugfestigkeit über 500 N/mm² aufweisen.

4. Brandschutzverglasung nach einem der Ansprüche 1 bis 3, **dadurch gekennzeichnet, dass** die Brandschutz-Glasscheibe (2) eine Transmission für sichtbares Licht im Bereich von 90 bis 92 % aufweist.

5. Brandschutzverglasung nach einem der Ansprüche 1 bis 4, **dadurch gekennzeichnet, dass** die Glasdicke der Brandschutz-Glasscheibe (2) 2 bis 20 mm beträgt.

6. Brandschutzverglasung nach einem der Ansprüche 1 bis 5, **dadurch gekennzeichnet, dass** die Brandschutz-Glasscheibe (2) Beschichtungen aufweist.

7. Brandschutzverglasung nach einem der Ansprüche 1 bis 6, **dadurch gekennzeichnet, dass** die Brandschutz-G!asscheibe (2) in Rahmen (1, 6) aus Holz, Stahl, Aluminium bzw. aus deren Kombinationen eingesetzt ist.

8. Brandschutzverglasung nach Anspruch 1 bis 6, **dadurch gekennzeichnet, dass** die Brandschutz-Glasscheibe (2) gemeinsam mit weiteren Scheiben in Rahmen (1, 6) aus Holz, Stahl, Aluminium bzw. aus deren Kombinationen eingesetzt ist.

9. Brandschutzverglasung nach Anspruch 7 oder 8, **dadurch gekennzeichnet, dass** der Einsatzbereich der Brandschutz-Glasscheibe (2) im Rahmen durch mindestens eine Glasleiste (3) abgedeckt ist.

10. Brandschutzverglasung nach Anspruch 8 oder 9, **dadurch gekennzeichnet, dass** die Brandschutz-Glasscheibe (2) in Verbindung mit einer beabstandet gehalterten Gegenscheibe (7) gleichzeitig als Isolierverglasung ausgebildet ist.

11. Brandschutzverglasung nach einem der Ansprüche 1 bis 10, **dadurch gekennzeichnet, dass** die Brandschutz-Glasscheibe (2) aus Floatglas besteht.
